# EUROPEAN PATENT APPLICATION

(11) **EP 4 826 076 A1**
(43) Date of publication of application: **21.10.2026**
(21) Application number: 24904312.6
(22) Date of filing: 16.12.2024
(51) Int. Cl.: C22C 38/38, C22C 38/34, C22C 38/06, C22C 38/32, C22C 38/28, C22C 38/22, C21D 8/02, C21D 9/46, C23C 2/04

(54) **PLATED STEEL SHEET AND METHOD FOR MANUFACTURING SAME**

(30) Priority: 14.12.2023 KR 20230182292
(71) Applicant: POSCO Co., Ltd, Gyeongsangbuk-do 37859 (KR)
(72) Inventor: LEE, Won-Hwi, Gwangyang-si, Jeollanam-do 57807 (KR); KWON, Min-Hyeok, Gwangyang-si, Jeollanam-do 57807 (KR); KIM, Do-Yub, Gwangyang-si, Jeollanam-do 57807 (KR)
(74) Representative: Meissner Bolte Partnerschaft mbB
(86) International application number: PCT/KR2024/020385
(87) International publication number: WO 2025/127747

(57) **Abstract**

The present invention relates to a plated steel sheet and a method for manufacturing same, the plated steel sheet comprising: a base steel sheet that contains, in wt%, 0.10-0.25% of C, 1.5-5.0% of Mn, 0.5-2.5% of Si, 1.5% or less of Cr, 0.005-0.100% of Al, 0.10% or less of P, 0.020% or less of S, and 0.0050% or less of B, with the remainder comprising Fe and inevitable impurities; and a plating layer formed on at least one surface of the base steel sheet, wherein the depth of an internal oxide layer composed of an oxide of at least one among Mn, Si, Cr, and B is 3-15 µm from the interface between the base steel sheet and the plating layer toward the middle of the plated steel sheet in the thickness direction. More specifically, the present invention relates to a plated steel sheet having excellent surface quality and welding LME resistance, and a method for manufacturing same.

## Description

### Technical Field

The present invention relates to a coated steel sheet and a method for manufacturing the same, and more particularly, to a coated steel sheet having excellent surface quality and resistance to welding LME (Liquid Metal Embrittlement), and a method for manufacturing the same.

### Background Art

Recently, technological development for automotive steel materials has been focused on weight reduction through high strengthening. To increase the strength of steel, various alloying elements are added to utilize precipitation strengthening and solid solution strengthening, and the development of AHSS (Advanced High Strength Steel), which induces phase transformation during the annealing process, is being actively pursued.

Elements that can be added to increase the strength of steel are representatively Mn, Si, Cr, B, etc., but because they have a high tendency to oxidize, they diffuse to the surface to combine with oxygen in the atmosphere during annealing and form surface oxides. These surface oxides can be a cause of deteriorating the surface reactivity of the steel sheet, thereby worsening properties such as phosphating treatability or platability.

Furthermore, as the steel material becomes higher in strength, a problem of cracking occurs in the heat-affected zone of a weld due to LME (Liquid Metal Embrittlement) during spot welding. This occurs as the coating layer of the hot-dip coated steel sheet changes to a liquid state during welding and penetrates along the grain boundaries of the steel sheet surface.

A representative method for reducing LME is to form a soft decarburized layer on the surface layer of the substrate steel sheet. The decarburized layer on the surface layer has the effect of suppressing the occurrence of cracks due to tensile stress that appears during spot welding.

Various technologies have been proposed to suppress surface oxides formed on the surface of the steel sheet during annealing. Patent Document 1 discloses oxidizing a steel sheet in a direct flame furnace (DFF) with an oxidizing atmosphere by controlling the air-fuel ratio of air and fuel to 0.80-0.95, thereby forming iron oxides including single or composite oxides of Si, Mn, or Al up to a certain depth inside the steel sheet. Thereafter, the iron oxides are reduced and annealed in a reducing atmosphere, and then hot-dip galvanizing is performed to provide a hot-dip galvanized or galvannealed steel sheet with excellent coating quality.

However, in the case of steel grades to which a certain amount or more of Si is added, during the reduction process, Si is enriched directly under the iron oxide to form a band-shaped Si oxide, which becomes a starting point for delamination at the surface layer. That is, delamination occurs at the interface between the reduced iron and the substrate iron, making it difficult to secure sealer adhesion and coating layer adhesion. In addition, the effect of forming a decarburized layer to improve LME resistance is insufficient.

Patent Document 2 discloses a method of improving platability by reducing external oxides on the steel sheet surface after annealing by internally oxidizing alloying elements such as Mn, Si, and Al, which are easily oxidized, inside the steel by maintaining a high dew point in an annealing furnace.

With the method of Patent Document 2, the platability problem caused by the external oxidation of Si, which is easily internally oxidized, can be solved, but when a large amount of Mn, which is relatively difficult to internally oxidize, is added, the effect may be insignificant. In addition, there is a limit to the effect of reducing surface oxidation of Si, Mn, etc. and the formation of a sufficient decarburized layer that can be achieved by applying internal oxidation once.
(Patent Document 1) Korean Patent Laid-Open Publication No. 10-2010-0030627 (Published on Mar. 18, 2010)
(Patent Document 2) Korean Patent Laid-Open Publication No. 10-2009-0006881 (Published on Jan. 15, 2009)

### Disclosure of Invention

### Technical Problem

An object of the present invention is to provide a coated steel sheet and a method for manufacturing the same.

An object of an embodiment of the present invention is to provide a coated steel sheet with excellent surface quality and welding LME resistance, and a method for manufacturing the same.

The problems of the present invention are not limited to the above-mentioned contents. A person of ordinary skill in the art will be able to understand additional problems of the present invention from the overall contents of this specification without any difficulty.

### Solution to Problem

According to an embodiment of the present invention, there may be provided a coated steel sheet comprising: a substrate steel sheet including, by weight%, C: 0.10-0.25%, Mn: 1.5-5.0%, Si: 0.5-2.5%, Cr: 1.5% or less, Al: 0.005-0.100%, P: 0.10% or less, S: 0.020% or less, B: 0.0050% or less, with the remainder being Fe and other inevitable impurities; and
a coating layer formed on at least one surface of the substrate steel sheet,
wherein a depth of an internal oxidation layer composed of one or more oxides of Mn, Si, Cr, and B is 3-15 µm based on a thickness center direction from an interface between the substrate steel sheet and the coating layer.

The substrate steel sheet may further include, by weight%, 1.2% or less of one or more of Ti, Mo, and Nb.

A depth of a decarburized layer may be 20-150 µm based on the thickness center direction from the interface between the substrate steel sheet and the coating layer.

The coated steel sheet may have a maximum LME crack length of 10 µm or less.

The coating layer may be a zinc-based or zinc-alloy-based coating layer.

According to an embodiment of the present invention, there may be provided a method for manufacturing a coated steel sheet, the method comprising: preparing a substrate steel sheet including, by weight%, C: 0.10-0.25%, Mn: 1.5-5.0%, Si: 0.5-2.5%, Cr: 1.5% or less, Al: 0.005-0.100%, P: 0.10% or less, S: 0.020% or less, B: 0.0050% or less, with the remainder being Fe and other inevitable impurities;
performing a first annealing on the substrate steel sheet at a temperature range of 600-900°C and a dew point temperature of -10-30°C;
performing a first pickling on the first-annealed substrate steel sheet;
performing a second annealing on the first-pickled substrate steel sheet at a temperature range of 700-900°C; and
coating at least one surface of the second-annealed substrate steel sheet.

The substrate steel sheet may further include, by weight%, 1.2% or less of one or more of Ti, Mo, and Nb.

The substrate steel sheet may be a cold-rolled steel sheet.

The first annealing step may be maintained for 50-600 seconds.

The second annealing step may be performed at a dew point temperature of -60-30°C.

The first annealing step and the second annealing step may be performed in a nitrogen gas atmosphere containing 1-80 vol% of hydrogen.

The coating step may be performed by zinc-based or zinc-alloy-based coating.

The method may further comprise performing an alloying heat treatment on the coated steel sheet.

The method may further comprise performing metal plating after the first pickling step.

The method may further comprise performing metal plating before the second annealing step.

The metal plating step may be Fe or Ni plating.

### Advantageous Effects of Invention

According to an embodiment of the present invention, a coated steel sheet and a method for manufacturing the same can be provided.

According to an embodiment of the present invention, a coated steel sheet having excellent surface quality and welding LME resistance and a method for manufacturing the same can be provided.

According to an embodiment of the present invention, a coated steel sheet having excellent surface quality and welding LME resistance, which can be used for automotive steel, and a method for manufacturing the same can be provided.

The diverse and beneficial advantages and effects of the present invention are not limited to the above-mentioned contents, and will be more easily understood in the process of describing specific embodiments of the present invention.

### Brief Description of Drawings

FIG. 1 is a diagram showing a method for calculating the surface enrichment of Mn in a steel sheet according to an embodiment of the present invention.
FIG. 2 is a cross-sectional SEM image of Invention Example 3 according to an embodiment of the present invention, showing a method for measuring the depth of an internal oxidation layer.
FIG. 3 is a graph showing the carbon concentration according to the depth of the steel sheet in a GDS (Glow Discharge Spectrometer) analysis, illustrating a method for obtaining the depth of a decarburized layer of a steel sheet according to an embodiment of the present invention.
FIG. 4 is a diagram showing a method for obtaining the position of the interface between a substrate steel sheet and a coating layer from GDS data to determine the depth of a decarburized layer of a steel sheet according to an embodiment of the present invention.
FIG. 5 is a cross-sectional SEM image of a steel sheet according to an embodiment of the present invention, showing a method for obtaining the depth of a decarburized layer of a nital-etched steel sheet.

### Best Mode for the Invention

Hereinafter, preferred embodiments of the present invention will be described. The implementations of the present invention may be modified into various other forms, and the scope of the present invention should not be construed as being limited to the embodiments described below. The embodiments of the present invention are provided to explain the present invention in more detail to those of ordinary skill in the art to which the present invention pertains.

Hereinafter, the present invention will be described in detail.

A coated steel sheet according to an embodiment of the present invention may include a substrate steel sheet; and a coating layer formed on at least one surface of the substrate steel sheet.

Hereinafter, the steel composition of the present invention will be described in detail.

Unless otherwise specified herein, the % indicating the content of each element is based on weight.

The substrate steel sheet of the coated steel sheet according to an embodiment of the present invention includes, by weight%, C: 0.10-0.25%, Mn: 1.5-5.0%, Si: 0.5-2.5%, Cr: 1.5% or less, Al: 0.005-0.100%, P: 0.10% or less, S: 0.020% or less, and B: 0.0050% or less.

### Carbon (C): 0.10~0.25%

Carbon (C) is an important element that can be added to stabilize retained austenite, and to secure this effect, 0.10% or more needs to be added. According to an embodiment of the present invention, carbon (C) may be added at 0.15% or more. On the other hand, if the carbon (C) content exceeds 0.25%, a problem of deteriorating weldability may occur. According to an embodiment of the present invention, the content may be 0.23% or less.

### Manganese (Mn): 1.5~5.0%

Manganese (Mn) is an essential element in transformation-induced plasticity steel because it exhibits the effect of suppressing ferrite transformation during cooling, in addition to the formation and stabilization of retained austenite. In addition, to sufficiently secure austenite and secure strength and ductility, manganese (Mn) may be included at 1.5% or more. According to an embodiment of the present invention, it may be 2.0% or more. On the other hand, if its content exceeds 5.0%, a problem of deteriorating properties due to excessive band formation caused by segregation induced during slab heating and hot rolling processes may occur. Therefore, according to an embodiment of the present invention, the upper limit of the manganese (Mn) content may be limited to 5.0%. According to an embodiment of the present invention, it may be 3.0% or less.

### Silicon (Si): 0.5~2.5%

Silicon (Si) is an element that suppresses the precipitation of carbides in ferrite and promotes the diffusion of carbon in ferrite to austenite, thereby contributing to the stabilization of retained austenite. To obtain such an effect, silicon (Si) may be added at 0.5% or more. According to an embodiment of the present invention, it may be 0.7% or more. However, if added too excessively, the surface reactivity may be lowered, so the upper limit of the silicon (Si) content may be limited to 2.5%. According to an embodiment of the present invention, it may be 2.0% or less.

### Chromium (Cr): 1.5% or less

Chromium (Cr) is an element that increases hardenability and plays a role in suppressing the formation of ferrite. Therefore, a small amount may be added as needed to secure appropriate retained austenite. According to an embodiment of the present invention, the chromium (Cr) content may be 0%. However, if its content is excessive, the amount of ferroalloy input becomes excessive, which may cause an increase in cost. Therefore, the upper limit of the chromium (Cr) content may be limited to 1.5%. According to an embodiment of the present invention, it may be 1.0% or less.

### Aluminum (Al): 0.005~0.100%

Aluminum (Al) is an element that contributes to the stabilization of retained austenite by suppressing the formation of carbides in ferrite, and to obtain this effect, it may be added at 0.005% or more. According to an embodiment of the present invention, it may be 0.010% or more. However, if its content exceeds 0.100%, it may be difficult to manufacture a sound slab through the reaction with the mold flux during casting. In addition, it may form surface oxides and impair hot-dip platability, so the upper limit of the aluminum (Al) content may be limited to 0.100%. According to an embodiment of the present invention, it may be 0.08% or less.

### Phosphorus (P): 0.10% or less

Phosphorus (P) is a solid solution strengthening element, but if its content exceeds 0.10%, weldability is lowered and the risk of embrittlement of the steel increases, so its upper limit may be limited to 0.10%.

### Sulfur (S): 0.020% or less

Sulfur (S) is an impurity element and an element that impairs the ductility and weldability of the steel sheet. Therefore, if the sulfur (S) content is high, the possibility of impairing the ductility and weldability of the steel sheet increases, and considering this, its upper limit may be limited to 0.020%.

### Boron (B): 0.0050% or less

Boron (B) is an element that can be added to secure strength. However, if the content of boron (B) exceeds 0.0050%, it is enriched on the surface of the annealed material and can greatly deteriorate the surface quality, so its content is limited to 0.0050% or less.

The steel of the present invention may include the balance iron (Fe) and inevitable impurities in addition to the above-described composition. Inevitable impurities may be unintentionally incorporated in a conventional manufacturing process, and therefore cannot be excluded. Since these impurities are known to anyone skilled in the conventional steel manufacturing field, all of their contents are not particularly mentioned in this specification.

The substrate steel sheet of the coated steel sheet according to an embodiment of the present invention may further include, by weight%, 1.2% or less of one or more of Ti, Mo, and Nb.

### one or more of titanium (Ti), molybdenum (Mo), and niobium (Nb): 1.2% or less

Titanium (Ti) can reduce the concentration of N in the steel by forming nitrides. On the other hand, if it is excessively included, a decrease in the carbon concentration of martensite and a decrease in strength may occur due to the precipitation of carbides.

Molybdenum (Mo) can contribute to an increase in strength. In particular, it has the effect of securing strength without deteriorating the wettability of molten metals such as zinc.

Niobium (Nb) can be segregated in the form of carbides at austenite grain boundaries to suppress the coarsening of austenite crystal grains during annealing heat treatment and increase strength, but if the input amount is excessive, it may cause an increase in cost.

Considering this, one or more of titanium (Ti), molybdenum (Mo), and niobium (Nb) may be included at 1.2% or less.

Hereinafter, the microstructure of the steel of the present invention will be described in detail.

In the coated steel sheet according to an embodiment of the present invention, the depth of the internal oxidation layer composed of one or more oxides of Mn, Si, Cr, and B may be 3-15 µm from the interface between the substrate steel sheet and the coating layer, based on the thickness center direction.

Internal oxidation occurs simultaneously as an internal oxidation layer formed along grain boundaries and an internal oxidation layer formed within grains, but in an embodiment of the present invention, the depth of the internal oxidation layer may be based on the grain boundary internal oxidation layer.

If the depth of the internal oxidation layer is less than 3 µm, the amount of internal oxidation is insufficient, and the amount of surface oxides formed by diffusion to the surface is relatively large, so there is a concern that the effect of improving surface quality will be insufficient. According to an embodiment of the present invention, the depth of the internal oxidation layer may be 4 µm or more. According to an embodiment of the present invention, the depth of the internal oxidation layer may be 5 µm or more. On the other hand, if the depth of the internal oxidation layer exceeds 15 µm, the heat treatment time becomes excessively long to form a deep internal oxidation layer, which may cause a problem of reduced economic feasibility.

In the coated steel sheet according to an embodiment of the present invention, the depth of the decarburized layer may be 20-150 µm from the interface between the substrate steel sheet and the coating layer, based on the thickness center direction.

If the depth of the decarburized layer is less than 20 µm, the thickness of the soft layer is insufficient, and there may be a problem that the LME improvement effect is insufficient. According to an embodiment of the present invention, it may be 30 µm or more. According to an embodiment of the present invention, it may be 35 µm or more. According to an embodiment of the present invention, it may be 40 µm or more. According to an embodiment of the present invention, it may be 50 µm or more. On the other hand, if the depth of the decarburized layer exceeds 150 µm, there may be a problem that the tensile strength decreases due to the excessive thickness of the soft layer.

The coating layer of the coated steel sheet according to an embodiment of the present invention may be a zinc-based or zinc-alloy-based coating layer.

The coated steel sheet according to an embodiment of the present invention may have a maximum LME crack length of 10 µm or less.

According to an embodiment of the present invention, the maximum LME crack length was evaluated according to the SEP 1220-2 standard. A coated steel sheet of the present invention and a coated steel sheet without a decarburized layer were overlapped and spot-welded, and then the welded coated steel sheet was sheared in the 0°, 45°, and 90° directions per specimen and observed by OM (Optical Microscopy) to measure the LME crack length. At this time, only B-type cracks in the heat-affected zone were measured, and the maximum crack length was presented.

Hereinafter, the method for manufacturing the steel of the present invention will be described in detail.

The coated steel sheet according to an embodiment of the present invention can be manufactured by preparing a substrate steel sheet satisfying the above-described alloy composition, followed by a first annealing, a first pickling, a second annealing, and coating.

### Preparation of a substrate steel sheet

A substrate steel sheet satisfying the alloy composition according to an embodiment of the present invention can be prepared.

According to an embodiment of the present invention, the substrate steel sheet may be a cold-rolled steel sheet. The manufacturing method of the cold-rolled steel sheet according to an embodiment of the present invention is not particularly limited, and conventional conditions applicable in the same technical field may be used.

### First annealing

The substrate steel sheet may be subjected to a first annealing at a temperature range of 600-900°C and a dew point temperature of -10-30°C for 50-600 seconds.

According to an embodiment of the present invention, the internal oxidation layer and the decarburized layer can be effectively formed by performing the first annealing. During the first annealing, an internal oxidation layer composed of oxides of Si, Mn, Cr, B, etc., is formed to a certain depth or more from the surface of the steel sheet, thereby depleting the dissolved Si, Mn, Cr, B, etc., in the surface layer of the steel sheet.

During the first annealing, Si has a very high tendency to oxidize, so it can be oxidized internally and prevent the formation of surface oxides. On the other hand, Mn, which has a relatively low tendency to oxidize compared to Si, can form a large amount of surface oxides on the surface. These surface oxides due to Mn can be removed through the first pickling performed after the first annealing.

By forming an internal oxidation layer through the first annealing, the Si oxides on the surface are reduced, and then by removing the Mn oxides through pickling, the surface can be in a clean state.

In addition, due to the cleaned surface after the first annealing, during the second annealing, oxygen in the atmosphere is more easily adsorbed onto the surface of the steel sheet, and carbon in the steel diffuses to the surface and combines with the adsorbed oxygen, thereby promoting the decarburization reaction. Through this, excellent coating quality can be secured, and by forming a sufficient decarburized layer, LME (Liquid Metal Embrittlement) during welding can be reduced.

During the first annealing, if the annealing temperature is less than 600°C, the diffusion of alloying elements such as Si and Mn to the grain boundaries of the surface layer is not smooth for forming the internal oxidation layer, and the diffusion of carbon to the surface for decarburization of the surface layer may not be smooth. On the other hand, if the annealing temperature exceeds 900°C, internal oxidation and decarburization may occur, but at an excessively high temperature, the energy consumption for maintaining the high temperature is large, which is an uneconomical problem.

During the first annealing, if the dew point temperature is less than -10°C, the partial pressure of oxygen in the atmosphere is not sufficient, and there may be a problem that it is difficult for oxygen to penetrate into the steel sheet. According to an embodiment of the present invention, it may be 0°C or more. On the other hand, if the dew point temperature exceeds 30°C, there is a concern that the atmosphere becomes one in which even iron is oxidized. According to an embodiment of the present invention, the dew point temperature may be limited to 20°C or less in order to more effectively internally oxidize Si without oxidizing iron.

During the first annealing, if the holding time is less than 50 seconds, the internal oxidation layer and the decarburized layer may be insufficiently formed. On the other hand, if the holding time exceeds 600 seconds, it is difficult to expect additional effects as the diffusible alloying elements in the surface layer have sufficiently reacted, and it may be disadvantageous in terms of economic feasibility.

According to an embodiment of the present invention, during the first annealing, the annealing atmosphere gas may be a nitrogen gas atmosphere containing 1-80 vol% of hydrogen. If the hydrogen content is less than 1 vol%, the steel sheet, which is iron, may be oxidized. On the other hand, if the hydrogen content exceeds 80 vol%, there is a risk of explosion upon gas leakage, and the cost may increase.

According to an embodiment of the present invention, during the first annealing, after holding, two or more cooling steps may be performed to obtain a desired microstructure. During the first annealing, the cooling rate is not particularly limited and may be a condition applicable in the same technical field. According to an embodiment of the present invention, during the first annealing, cooling may be performed at a cooling rate of 1-100°C/s.

If the cooling rate is not high, gas cooling using nitrogen gas containing a certain amount of hydrogen may be performed, and to increase the cooling rate, mist cooling, water quenching, or water jet cooling using water may be performed. When wet cooling including a large amount of water is performed, the steel sheet comes into direct contact with water, and the dew point temperature due to steam may increase rapidly, so an iron oxide film may be formed on the surface. In this case, it is necessary to remove the iron oxide film through pickling after cooling is completed.

On the other hand, during cooling, the atmosphere may be a nitrogen gas atmosphere containing 1-80 vol% of hydrogen.

In addition, according to an embodiment of the present invention, during the first annealing, the heating rate may be 1-50°C/s.

### First pickling

The first-annealed substrate steel sheet may be subjected to a first pickling.

According to an embodiment of the present invention, oxides formed on the surface of the steel sheet during the first annealing can be removed through the first pickling.

During the first pickling, the type of acid is not particularly limited, but according to an embodiment of the present invention, an acid solution of 3-20 wt% at 30-80°C may be used. According to an embodiment of the present invention, pickling may be performed using 5 wt% hydrochloric acid at 50-60°C. According to an embodiment of the present invention, when strong acid pickling is applied, 18 wt% hydrochloric acid at 80°C may be used.

According to an embodiment of the present invention, metal plating may be additionally performed after the first pickling. According to an embodiment of the present invention, Fe, Ni, etc. may be plated as the metal plating. By additionally performing the metal plating process, it is possible to help prevent Si, Mn, etc. from diffusing to the surface during the second annealing. The metal plating conditions are not particularly limited and may be conditions applicable in the same technical field. According to an embodiment of the present invention, in the case of Fe plating, the coating weight may be 0.1-3 g/m². According to an embodiment of the present invention, in the case of Ni plating, the coating weight may be 5-700 mg/m². According to an embodiment of the present invention, during metal plating, a device on the exit side of the first annealing line may be used.

### Second annealing

The first-pickled substrate steel sheet may be subjected to a second annealing at a temperature range of 700-900°C and a dew point temperature of -60-30°C.

According to an embodiment of the present invention, desired tensile properties can be secured by performing the second annealing. During the second annealing, due to the internal oxidation layer formed in the first annealing process, annealing can be performed in a state where Si, Mn, Cr, B, etc. in a solid solution state are greatly reduced to a certain depth from the surface of the steel sheet. Due to this depleted layer, surface oxides of Si, Mn, Cr, and B, which are formed by diffusion to the surface of the steel sheet during the second annealing, can be greatly suppressed.

That is, by performing the first annealing and the first pickling before the second annealing, the steel sheet after the second annealing can have a cleaner surface state. A clean surface of the steel sheet has a large area of Fe exposure, so the surface reactivity is improved, which can have the effect of improving the coating quality. Hot-dip coating is improved as the oxides on the surface of the annealed steel sheet are reduced, because it is easier for a small amount of Al in the coating bath to react with Fe of the steel sheet to form an inhibition layer, and the wettability of the liquid coating solution and the steel sheet is improved. The surface oxides that adversely affect platability are various, such as Mn, Si, Cr, B, etc., but among them, Mn and Si can be representative.

During the second annealing, if the annealing temperature is less than 700°C, it may be insufficient to obtain the desired microstructure. On the other hand, if the annealing temperature exceeds 900°C, the economic feasibility may decrease due to energy consumption.

During the second annealing, if the dew point temperature is less than -60°C, it is a very difficult problem in reality, considering the ability to maintain the atmosphere in large-scale production facilities. According to an embodiment of the present invention, the lower limit may be limited to -10°C in order to more deeply form the internal oxidation layer and the decarburized layer in addition to securing physical properties. According to an embodiment of the present invention, it may be 0°C or more. On the other hand, if the dew point temperature exceeds 30°C, iron is oxidized, and it may be difficult to additionally secure a decarburized layer. According to an embodiment of the present invention, it may be 20°C or less.

According to an embodiment of the present invention, during the second annealing, the holding time may be 30-100 seconds. In addition, according to an embodiment of the present invention, during the second annealing, the holding time may be shorter than the holding time of the first annealing.

According to an embodiment of the present invention, during the second annealing, the annealing atmosphere gas may be a nitrogen gas atmosphere containing 1-80 vol% of hydrogen. If the hydrogen content is less than 1 vol%, the steel sheet, which is iron, may be oxidized. On the other hand, if the hydrogen content exceeds 80 vol%, there is a risk of explosion upon gas leakage, and the cost may increase.

During the second annealing, the cooling conditions are not particularly limited, and according to an embodiment of the present invention, after holding, slow cooling is performed to 650°C, and then rapid cooling may be performed according to the target properties. According to an embodiment of the present invention, during cooling, the conditions are not particularly limited, but the conditions may be varied to achieve the target properties. In addition, since the formation of surface oxides, internal oxidation layer, and decarburized layer mostly occurs in a relatively high-temperature region, the present invention does not particularly limit the cooling conditions.

On the other hand, according to an embodiment of the present invention, during the second annealing, after holding, gas cooling and wet cooling using water may be performed in the same manner as in the first annealing.

According to an embodiment of the present invention, during cooling, a reducing atmosphere may be applied to at least iron to prevent oxidation of iron. To maintain a reducing atmosphere, a nitrogen gas atmosphere containing 1-80 vol% of hydrogen, which is the same as the atmosphere gas during the second annealing, may be applied.

Furthermore, according to an embodiment of the present invention, the rapidly cooled steel sheet may be reheated to a certain temperature for tempering as needed.

According to an embodiment of the present invention, metal plating may be additionally performed before the second annealing. By additionally performing the metal plating process before the second annealing, it is possible to help prevent Si, Mn, etc. from diffusing to the surface during the second annealing. Before the second annealing, the metal plating conditions can be applied in the same manner as the metal plating process after the first pickling described above. According to an embodiment of the present invention, during metal plating, a device on the entry side of the second annealing line may be used.

### Coating

At least one surface of the second-annealed substrate steel sheet may be coated.

According to an embodiment of the present invention, coating may be performed through reheating after the second annealing. The type of coating is not particularly limited, and according to an embodiment of the present invention, hot-dip coating may be performed. According to an embodiment of the present invention, coating may be performed using a hot-dip zinc-based coating bath, and the conditions during hot-dip coating are not particularly limited. In addition, according to an embodiment of the present invention, an alloying heat treatment may be additionally performed as needed after coating.

### Mode for the Invention

Hereinafter, the present invention will be described in more detail through examples. However, it should be noted that the following examples are for illustrating the present invention in more detail and are not intended to limit the scope of rights of the present invention.

### (Example)

Cold-rolled steel sheets having the compositions of Table 1 were prepared. For two types of steel sheets, a first annealing and a first pickling were performed under the conditions shown in Table 2. During the first annealing, the atmosphere was a reducing atmosphere with a nitrogen gas containing 5% hydrogen. In addition, during the first annealing, the temperature was raised to 800°C at a heating rate of 3°C/s and held for 150 seconds, and after cooling, a first pickling was performed by immersing in a 5 vol% hydrochloric acid solution at 50°C for 5 seconds.

**[Table 1]**

| Steel Type | Alloy Composition (wt%) | | | | | | | | |
|---|---|---|---|---|---|---|---|---|---|
| | C | Mn | Si | Cr | Al | P | S | Ti | B |
| A | 0.20 | 2.4 | 1.0 | - | 0.030 | 0.01 | 0.002 | 0.02 | 0.0018 |
| B | 0.19 | 2.7 | 1.6 | 0.5 | 0.040 | 0.01 | 0.001 | 0.02 | 0.0020 |

In addition, Table 2 shows the measurement of Si and Mn surface enrichment before and after the first pickling after performing the first annealing, and the analysis of the depth of the internal oxidation layer and the decarburized layer. The amount of Si and Mn surface enrichment before and after pickling can be estimated as the amount of Si and Mn oxides remaining on the surface of the steel sheet. The Si and Mn surface enrichment is considered to be enriched on the surface by diffusing to the surface during annealing and combining with oxygen in the atmosphere, and it is safe to view it as the amount of oxidation.

The specific Si and Mn surface enrichment can be calculated by performing GDS analysis. In the GDS data, the main components of each steel composition, Fe, Mn, Si, Cr, and B, are left, and the data is processed so that the sum of the weight% of the main components becomes 100%. Here, Fe is included because it is the main component of the steel sheet, and oxygen is not included. In addition, components included in the steel sheet other than the above components may be added and processed, but the components enriched on the surface during annealing are limited, and the amount is also extremely small, so they were omitted.

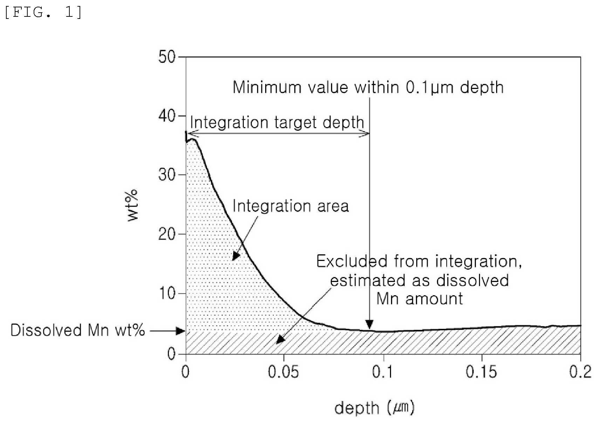

FIG. 1 shows a method for calculating the Mn surface enrichment of a steel sheet according to an embodiment of the present invention. The Si surface enrichment can also be calculated by the same method described below. As shown in FIG. 1, a graph is drawn with the depth of the processed data as the x-axis and the weight% of each component as the y-axis. After limiting the depth to 0.1 µm for each component, the minimum point of the weight% of each component within 0.1 µm is found, and that value is estimated as the amount of the dissolved component. When the amount of the dissolved component is found, the data at a deeper depth based on that position is deleted. From the surface to the position of the dissolved component amount, the dissolved component amount is subtracted from the weight% of each component. This process is to sort out only the oxides from the GDS data and calculate by excluding the dissolved Mn or Si value. After that, the enrichment amount can be estimated as the integral value from the surface to the position of the dissolved component value with the data from which the dissolved component value has been subtracted. If the minimum weight% value of each component occurs in the outermost part between depth 0-0.01 µm, it can be interpreted that there is almost no surface enrichment of the corresponding component.

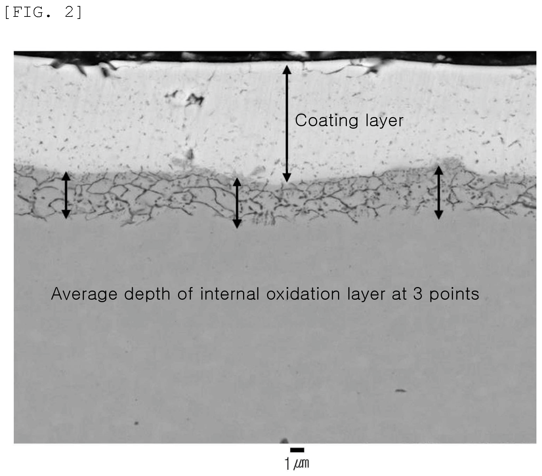

In addition, the depth of the internal oxidation layer in Table 2 was entered by observing the cross-section of the annealed steel sheet at a magnification of 3000x with an SEM and entering the grain boundary internal oxidation depth. FIG. 2 is a cross-sectional SEM image of Invention Example 3 according to an embodiment of the present invention, showing a method for measuring the depth of the internal oxidation layer. As in FIG. 2, the average value can be derived by measuring three random points in a 3000x magnification image.

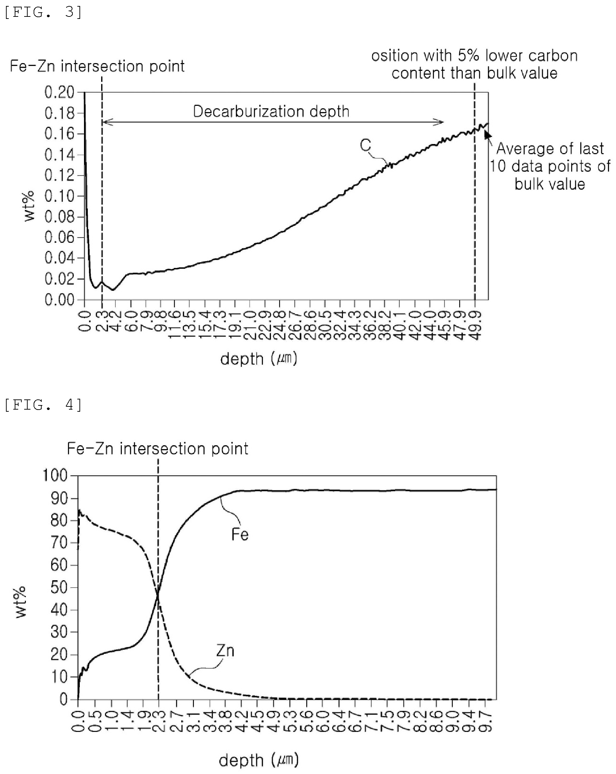

The specific depth of the decarburized layer can be derived by analyzing the carbon content for each depth with a GDS (Glow Discharge Spectrometer). There are two methods. The first is a case where a section where the carbon content graph appears horizontal is visible within the GDS measurable depth, which is a case where GDS analysis is possible beyond the depth of the decarburized layer to the bulk structure. The depth of the decarburized layer at this time is obtained as shown in FIG. 3. FIG. 3 is a graph showing the carbon concentration according to the depth of the steel sheet in a GDS (Glow Discharge Spectrometer) analysis, illustrating a method for obtaining the depth of a decarburized layer of a steel sheet according to an embodiment of the present invention. FIG. 4 is a diagram showing a method for obtaining the position of the interface between a substrate steel sheet and a coating layer from GDS data to determine the depth of a decarburized layer of a steel sheet according to an embodiment of the present invention. First, as shown in FIG. 4, the interface position between the coating layer and the substrate steel sheet is found from the GDS data. The interface position between the coating layer and the substrate steel sheet is the point where the graphs of zinc and iron intersect, and this point is estimated as the surface of the substrate steel sheet where decarburization begins. Then, a graph is drawn with the carbon content, and the average of the 10 carbon content data values at the deepest depth in the carbon content graph is obtained. This average value of the 10 carbon content data at the deepest depth is called the bulk value. Then, the depth showing the first carbon content that drops by 5% or more from the bulk value among the carbon content data in the surface direction from the deepest position is found. This point is the deepest decarburized layer depth. The total decarburized layer depth of the coated steel sheet is from the intersection point of zinc and iron to the deepest decarburized depth.

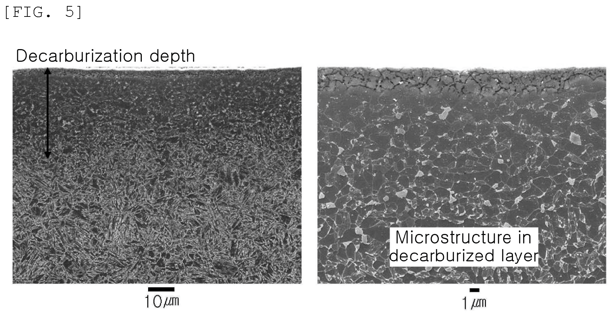

The second is a case where the depth of the decarburized layer is very deep and deviates from the GDS measurable range. In this case as well, the analysis is performed based on the 10 carbon content values at the deepest depth, similar to the first case. Whether the carbon content at the deepest depth of the GDS data has reached the bulk value can be estimated from the OES (Optical Emission Spectrometry) analysis value. That is, if the analysis value is at least 50 µm deep when analyzed to the deepest depth measurable by GDS, and the carbon content at the deepest depth is lower than the OES carbon content, it is estimated that the depth of the decarburized layer is at least 50 µm or more because it has not yet reached the bulk. To know the approximate depth of the decarburized layer, a cross-sectional microstructure observation is performed through nital etching (nitric acid 2-5 vol% in ethanol or methanol). FIG. 5 is a cross-sectional SEM image of a steel sheet according to an embodiment of the present invention, showing a method for obtaining the depth of a decarburized layer of a nital-etched steel sheet. As shown in FIG. 5, it can be observed with an SEM, and the magnification can be observed from 1000x to 3000x. The microstructure of the surface layer shows coarse grains mainly of ferrite, and the bulk structure shows a microstructure including austenite. The depth composed mainly of the coarse decarburized structure can be regarded as the depth of the decarburized layer.

**[Table 2]**

| Specimen No . | Steel Type | 1st Annealing | After 1st Annealing | | After 1st Annealing and 1st Pickling | | | |
|---|---|---|---|---|---|---|---|---|
| | | Dew Point Temp. (°C) | Si Surface Enrichment | Mn Surface Enrichment | Si Surface Enrichment | Mn Surface Enrichment | Internal Oxidation Layer Depth (µm) | Decarburized Layer Depth (µm) |
| 1 | A | -40 | 0.208 | 0.339 | 0.0672 | 0.0082 | 0 | 7 |
| 2 | A | 5 | 0.016 | 0.212 | 0.0052 | 0.0048 | 4.4 | 14 |
| 3 | B | -40 | 0.211 | 0.422 | 0.0698 | 0.0095 | 0 | 4 |
| 4 | B | 5 | 0.013 | 0.255 | 0.0044 | 0.0052 | 3.8 | 17 |

As shown in Table 2, Specimen Nos. 1 and 3 are cases where the dew point temperature is -40°C, which does not satisfy the conditions of the present invention, and Specimen Nos. 2 and 4 are cases where the dew point temperature satisfies the conditions of the present invention. It can be confirmed that the Si and Mn surface enrichment of Specimen Nos. 2 and 4 is significantly reduced compared to Specimen Nos. 1 and 3.

On the other hand, looking at the results after pickling, it can be confirmed that the Si surface enrichment of Specimen Nos. 1 and 3 has decreased compared to before pickling, but since a small amount was enriched even before pickling in Specimen Nos. 2 and 4 due to internal oxidation, the value is even lower after pickling compared to Specimen Nos. 1 and 3.

The Mn surface enrichment also decreased, but its reduction ratio is small compared to the Si surface enrichment. After pickling, the Mn surface enrichment of all specimens decreased significantly compared to before pickling. This is because Mn oxides are easily dissolved by pickling. Before pickling, in the case of Specimen Nos. 2 and 4, which satisfy the conditions of the present invention, since the internal oxidation layer was formed, the Mn surface enrichment was lower than that of Specimen Nos. 1 and 3, and this tendency is also shown after pickling.

In the case of Specimen Nos. 1 and 3, an internal oxidation layer was not formed, and it can be confirmed that the decarburized layer was also hardly formed, being 7 µm or less.

In the case of Specimen Nos. 2 and 4, Si, which has a high oxidation tendency, did not diffuse to the surface, but combined with oxygen that penetrated into the steel sheet due to the high dew point temperature in the high atmosphere, forming an internal oxidation layer. Therefore, it can be confirmed that the Si surface enrichment is higher in the case of Specimen Nos. 1 and 3 than in Specimen Nos. 2 and 4.

In the case of Specimen Nos. 1 and 3, if Si and Mn do not form an internal oxidation layer and diffuse to the surface to form surface oxides, even if pickling is performed later, it is difficult to remove the Si surface oxides. Mn, which is easily dissolved in hydrochloric acid compared to Si, is removed after pickling. However, if the second annealing is performed in a state where a large amount of Si oxides are formed on the surface, the adsorption of oxygen in the atmosphere onto the steel sheet and the diffusion into the interior are hindered by the Si surface oxides, and it is also disadvantageous for the decarburization reaction in which carbon in the steel sheet diffuses to the surface and combines with the adsorbed oxygen.

In addition, for the steel sheets having the compositions of Table 1, a first annealing, a first pickling, a second annealing, and coating were performed under the conditions shown in Table 3. At this time, during the first annealing, the atmosphere was a reducing atmosphere with a nitrogen gas containing 5% hydrogen. In addition, during the first annealing, the temperature was raised to 800°C at a heating rate of 3°C/s and held for 150 seconds, and after cooling, a first pickling was performed by immersing in a 5 vol% hydrochloric acid solution at 50°C for 5 seconds. Subsequently, during the second annealing, the atmosphere was a reducing atmosphere with a nitrogen gas containing 5% hydrogen, and during the second annealing, the temperature was raised to 810°C at a heating rate of 3.2°C/s and held for 50 seconds, followed by cooling. During cooling, a first cooling was performed to 650°C at 3.1°C/s, and then a second cooling was performed to 350°C at 20°C/s. After the second cooling, reheating was performed to 470°C to perform GA hot-dip coating. At this time, the GA alloying temperature was 500°C.

For the manufactured steel sheets, the Si and Mn surface enrichment, the depth of the internal oxidation layer, and the depth of the decarburized layer were measured by the above-described method and are shown in Table 3.

In addition, to evaluate the coating surface quality, after performing galvannealing, the level of uncoated spots on the coating surface was evaluated with the naked eye according to the following grades.
1: No spot-like uncoated defects are observed.
2: Some spot-like uncoated defects are observed.
3: A cluster of spot-like uncoated defects are observed.
4. Product is unacceptable due to large uncoated defects.
5. Coating is impossible due to uncoated defects on the entire surface.

In addition, to evaluate LME resistance, the maximum length of B-type LME cracks was recorded. The LME evaluation was performed according to the SEP 1220-2 standard, and the manufactured coated steel sheet and a coated steel sheet without a decarburized layer were overlapped and spot-welded. The LME crack was observed by shearing the welded coated steel sheet specimen in the 0°, 45°, and 90° directions and observing it with an OM (Optical Microscopy) to measure the length. Only B-type cracks in the heat-affected zone were measured, and the maximum crack length is shown in Table 3.

**[Table 3]**

| Specimen No . | Steel Type | 1st Annealing | 2nd Annealing | After 2nd Annealing | | After 2nd Annealing and Coating | | Coating Surface Quality | B type LME Max. Crack Length (µm) | Classification |
|---|---|---|---|---|---|---|---|---|---|---|
| | | Dew Point Temp. (°C) | Dew Point Temp. (°C) | Si Surface Enrichment | Mn Surface Enrichment | Internal Oxidation Layer Depth (µm) | Decarburized Layer Depth (µm) | | | |
| 1 | A | Not performed | -40 | 0.210 | 0.347 | 0 | 5 | 5 | 64 | Comparative Examples 1 |
| 2 | A | Not performed | 5 | 0.056 | 0.218 | 2.6 | 18 | 3 | 42 | Comparative Example s 2 |
| 3 | A | -40 | -40 | 0.303 | 1.219 | 0 | 2 | 5 | 66 | Comparative Examples 3 |
| 4 | A | -40 | 5 | 0.252 | 1.034 | 2.3 | 16 | 4 | 38 | Comparative Examples 4 |
| 5 | A | 5 | -40 | 0.049 | 0.105 | 4.4 | 25 | 1 | 7 | Invention Examples 1 |
| 6 | A | 5 | 5 | 0.011 | 0.091 | 6.2 | 55 | 1 | not occur | Invention Examples 2 |
| 7 | B | Not performed | -40 | 0.215 | 0.318 | 0 | 4 | 5 | 77 | Comparative Examples 5 |
| 8 | B | Not performed | 5 | 0.062 | 0.213 | 2.8 | 15 | 3 | 52 | Comparative Examples 6 |
| 9 | B | -40 | -40 | 0.310 | 1.198 | 0 | 5 | 5 | 69 | Comparative Examples 7 |
| 10 | B | -40 | 5 | 0.256 | 1.152 | 2.1 | 14 | 4 | 44 | Comparative Examples 8 |
| 11 | B | 5 | -40 | 0.057 | 0.128 | 3.8 | 48 | 1 | not occur | Invention Examples 3 |
| 12 | B | 5 | 5 | 0.014 | 0.087 | 6.7 | 73 | 1 | not occur | Invention Examples 4 |

As shown in Table 3, the invention examples that satisfy the alloy composition and manufacturing method proposed in the present invention secured all the target properties. In particular, Invention Examples 1 and 2 are examples in which two annealings were performed, and internal oxidation was performed in the first annealing. In Invention Example 1, although internal oxidation was not performed during the second annealing, an internal oxidation layer was formed to a certain depth or more, and as a result, the coating quality was excellent, and the LME resistance was also improved. This is the result of forming a depleted layer of Mn and Si of a sufficient level by performing internal oxidation in the first annealing, and then performing the second annealing in a clean state where the Mn surface oxides formed on the surface were removed by pickling after annealing. When the surface of the steel sheet completed with the first annealing is clean, there are almost no oxides on the surface of the steel sheet during the second annealing, and even if internal oxidation is not performed during the second annealing, the amount of Si and Mn that diffuses to the surface is limited due to the already existing depleted layer. As a result, the Si surface enrichment of the final surface is at a very low level. Invention Example 2 shows a cleaner surface state by performing internal oxidation even during the second annealing. A clean steel sheet surface with almost no surface oxides after the first annealing and the first pickling allows oxygen to penetrate deeper into the steel sheet more easily during the second annealing, because there are almost no alloying elements that diffuse to the surface during the second annealing. In addition, on a clean surface, the decarburization reaction, in which carbon diffuses to the surface of the steel sheet and occurs, can be actively carried out. As a result, the coating quality was excellent, and LME cracks did not occur.

Invention Examples 3 and 4 also confirmed a similar trend to Invention Examples 1 and 2.

On the other hand, Comparative Examples 1 and 2 are examples in which the first annealing was not performed, and only the second annealing was performed. In Comparative Example 1, no internal oxidation layer was observed, and the wettability of the coating layer was very poor. After the second annealing, the Si surface enrichment is relatively high, which means that a large amount of Si oxides were formed on the surface. In addition, the depth of the decarburized layer was also observed to be shallow. As a result, the LME resistance was poor. In Comparative Example 2, an internal oxidation layer was formed to a depth of 2.6 µm, and surface oxidation was suppressed to a certain extent, and the Si surface enrichment also increased compared to Comparative Example 1, but uncoated defects occurred in clusters. In addition, although a decarburized layer was also formed to 18 µm, the level of surface quality and LME resistance targeted in the present invention was still not secured.

Comparative Examples 3 and 4 were performed with the first and second annealings, but internal oxidation was not performed during the first annealing. In Comparative Example 3, a large amount of surface oxides were formed during the first annealing, and although the Mn surface oxides were removed through pickling, the Si surface oxides remained as they were. As this state proceeded to the second annealing, more surface oxides were accumulated, and as a result, the coating surface quality was very poor. In addition, the LME resistance was poor as the internal oxidation layer and the decarburized layer were hardly observed. In Comparative Example 4, a large amount of surface oxides were formed during the first annealing, and after pickling, Si surface oxides remained, but as internal oxidation occurred during the second annealing, the additional surface oxides from the second annealing were relatively reduced. However, the level of coating quality targeted in the present invention was not secured. The depth of the decarburized layer was also not formed to the level proposed in the present invention, and the LME resistance was poor.

Comparative Example 2, Comparative Example 4, and Invention Example 1 are all cases in which internal oxidation was performed once. On the other hand, the first annealing of the present invention for generating internal oxidation has a long holding time compared to the second annealing, and forming the internal oxidation layer and the decarburized layer is dominated by the time maintained at a high temperature. Therefore, the depth of the internal oxidation layer and the decarburized layer of Invention Example 1, in which internal oxidation was performed in the first annealing, was relatively deeper than that of Comparative Example 2 and Comparative Example 4, in which internal oxidation was performed in the second annealing.

Comparative Examples 5 to 8 also confirmed a similar trend to Comparative Examples 1 to 4.

From the above, the invention was described in detail through the examples, but other forms of embodiments are also possible. Therefore, the technical spirit and scope of the claims described below are not limited to the examples.

## Claims

1. A coated steel sheet, comprising:
a substrate steel sheet including, by weight%, C: 0.10 to 0.25%, Mn: 1.5 to 5.0%, Si: 0.5 to 2.5%, Cr: 1.5% or less, Al: 0.005 to 0.100%, P: 0.10% or less, S: 0.020% or less, B: 0.0050% or less, with a remainder being Fe and other inevitable impurities; and
a coating layer formed on at least one surface of the substrate steel sheet,
wherein a depth of an internal oxidation layer composed of one or more oxides of Mn, Si, Cr, and B is 3 to 15 µm from an interface between the substrate steel sheet and the coating layer toward a center of a thickness thereof.

2. The coated steel sheet of claim 1,
wherein the substrate steel sheet further comprises, by weight%, 1.2% or less of one or more selected from the group consisting of Ti, Mo, and Nb.

3. The coated steel sheet of claim 1,
wherein a depth of a decarburized layer is 20 to 150 µm from the interface between the substrate steel sheet and the coating layer toward the center of the thickness thereof.

4. The coated steel sheet of claim 1,
wherein the coated steel sheet has a maximum LME crack length of 10 µm or less.

5. The coated steel sheet of claim 1,
wherein the coating layer is a zinc-based or zinc-alloy-based coating layer.

6. A method for manufacturing a coated steel sheet, the method comprising:
preparing a substrate steel sheet comprising, by weight%, C: 0.10 to 0.25%, Mn: 1.5 to 5.0%, Si: 0.5 to 2.5%, Cr: 1.5% or less, Al: 0.005 to 0.100%, P: 0.10% or less, S: 0.020% or less, B: 0.0050% or less, with a remainder being Fe and other inevitable impurities;
performing a first annealing on the substrate steel sheet at a temperature in a range of 600 to 900°C and at a dew point temperature of -10 to 30°C;
performing a first pickling on the first-annealed substrate steel sheet;
performing a second annealing on the first-pickled substrate steel sheet at a temperature in a range of 700 to 900°C; and
coating at least one surface of the second-annealed substrate steel sheet.

7. The method of claim 6,
wherein the substrate steel sheet further comprises, by weight%, 1.2% or less of one or more selected from the group consisting of Ti, Mo, and Nb.

8. The method of claim 6,
wherein the substrate steel sheet is a cold-rolled steel sheet.

9. The method of claim 6,
wherein the first annealing step is maintained for 50 to 600 seconds, and
the second annealing step is performed at a dew point temperature of -60 to 30°C.

10. The method of claim 6,
wherein the first annealing step and the second annealing step are performed in a nitrogen gas atmosphere containing 1 to 80 vol% of hydrogen.

11. The method of claim 6,
wherein the coating step is performed by zinc-based or zinc-alloy-based coating.

12. The method of claim 6,
further comprising performing an alloying heat treatment on the coated steel sheet.

13. The method of claim 6,
further comprising performing a metal plating step after the first pickling step.

14. The method of claim 13,
further comprising performing the metal plating step before the second annealing step.

15. The method of claim 13 or 14,
wherein the metal plating step is Fe or Ni plating.
